# EUROPEAN PATENT APPLICATION

(11) **EP 2 660 003 A2**
(43) Date of publication of application: **06.11.2013**
(21) Application number: 13166105.0
(22) Date of filing: 01.05.2013
(51) Int. Cl.: B23P 6/00, B23K 1/00, F01D 5/00

(54) **Method of repairing a turbine component**

(30) Priority: 01.05.2012 US 201213461574
(71) Applicant: General Electric Company, Schenectady, New York 12345 (US)
(72) Inventor: Hunt, Mark Lawrence, Greenville, SC South Carolina 29615 (US); Janawitz, Jamison William, Atlanta, GA Georgia 30339 (US); Oconnell, Matthew James, Greenville, SC South Carolina 29615 (US)
(74) Representative: Picker, Madeline Margaret

(57) **Abstract**

A method of repairing a turbine component (100) having an array (10) of partitions (12) is provided and includes machining one or more partitions (12) of the array (10) to remove trailing edge sections (124) thereof, fabricating one or more replacement inserts (30), respectively locating the one or more replacement inserts (30) in the one or more machined partitions and substantially simultaneously brazing the one or more replacement inserts (30) to the one or more machined partitions (12).

## Description

The subject matter disclosed herein relates to a method of repairing a turbine component.

Steam turbines include static nozzle (or "airfoil") segments or partitions that direct flow of a working fluid into turbine buckets connected to a rotating rotor. A complete assembly of partitions is commonly referred to as a diaphragm stage of the steam turbine. During steam turbine operation, working fluid passes through the diaphragm stage and aerodynamically interacts with the partitions. This interaction damages the partitions and, eventually, leads to performance degradation of the steam turbine.

Thus, it is often necessary to repair the partitions of a given diaphragm stage. In conventional systems, such repair is conducted in a time consuming manner by manual fusion welding to restore partition dimensions in a one-by-one sequence or to attach a prefabricated insert to each partition in another one-by-one sequence.

According to one aspect of the invention, a method of repairing a turbine component having an array of partitions is provided and includes machining one or more partitions of the array to remove trailing edge sections thereof, fabricating one or more replacement inserts, respectively locating the one or more replacement inserts in the one or more machined partitions and substantially simultaneously brazing the one or more replacement inserts to the one or more machined partitions.

According to another aspect of the invention, a method of repairing a turbine component having an array of partitions is provided and includes machining each partition of the array to remove trailing edge sections thereof, fabricating replacement inserts, locating the replacement inserts in the machined partitions and substantially simultaneously brazing the replacement inserts to the machined partitions.

According to yet another aspect of the invention, a turbine component is provided and includes inner and outer rings disposed to define a fluid pathway, an array of partitions supportively disposed between the inner and outer rings to aerodynamically interact with a working fluid flowing along the fluid pathway, one or more of the partitions of the array of partitions including a partial airfoil section and a replacement insert braze-coupled to the partial airfoil section.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan view of a partition and a replacement insert of a turbine component; and
FIG. 2 is a perspective view of a portion of the turbine component of FIG. 1.

The detailed description explains embodiments of the invention, together with advantages and features, by way of example with reference to the drawings.

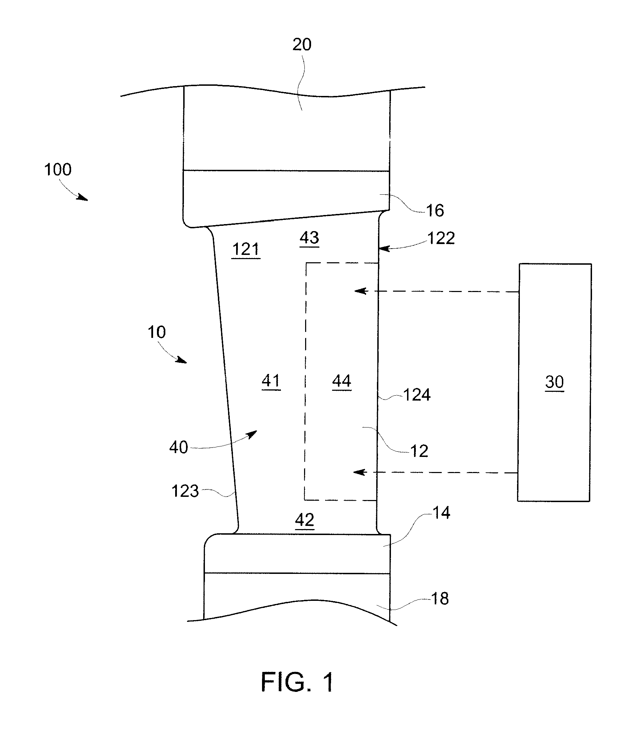

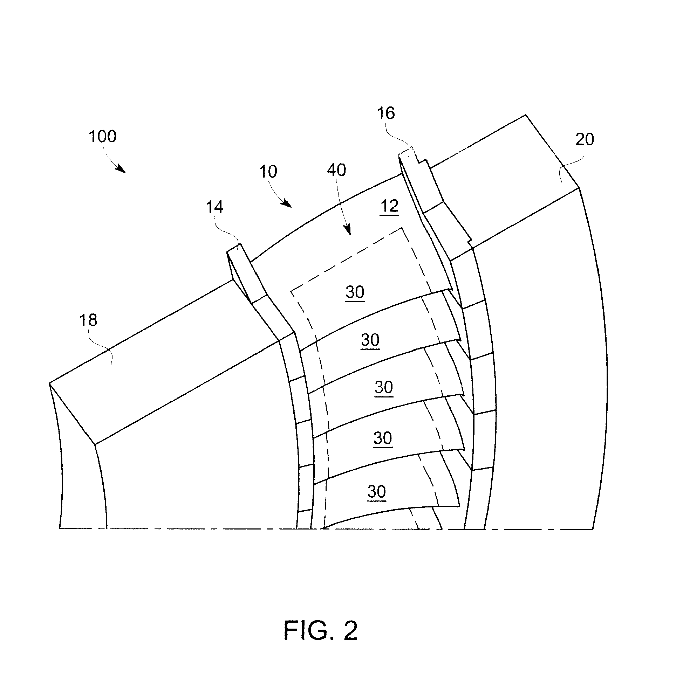

With reference to FIGS. 1 and 2, a diaphragm 100 or a similar turbine component for a gas or steam turbine engine is provided. The diaphragm 100 includes an array 10 of partitions 12 with each of the partitions having an inner sidewall 14 and an outer sidewall 16. The diaphragm 100 further includes an inner ring 18 and an outer ring 20, which are cooperatively formed to define a fluid pathway through which a working fluid, such as steam in a steam turbine engine, may be directed to flow. Each partition 12 may have an airfoil shape with a spanwise length that extends across the fluid pathway and a chord length that extends along an axial length of the diaphragm 100. With such an airfoil shape, the partitions 12 each have a suction side 121, a pressure side 122 opposite the suction side 121, a lead edge 123 defined in accordance with a direction of flow through the fluid pathway and a trailing edge 124 opposite the lead edge 123.

During operational conditions, the working fluid aerodynamically interacts with the partitions 12 and over time this may lead to damage. In many cases, the damage is located at or around the trailing edges 124 of one or more of the partitions 12. Often, all of the partitions 12 in the array 10 suffer substantially similar amounts and types of damage. Thus, in accordance with aspects of the invention, a method of repairing a turbine component, such as the diaphragm 100 or any other similar gas or steam turbine engine component, is provided.

With reference to FIG. 1, the method includes machining one or more partitions 12 in the array 10 to remove damaged sections of at least the trailing edges 124, fabricating one or more replacement inserts 30, respectively locating the one or more replacement inserts 30 in the one or more machined partitions 12 and substantially simultaneously brazing the one or more replacement inserts 30 to the one or more machined partitions 12 such that the partitions 12 are returned to their proper shape and size such that they can be operationally deployed (i.e., deployed in an operational steam turbine engine).

In general, the method will commence following the operation of the diaphragm 100 for a predefined time. This predefined time may be set in accordance with an understanding that at its conclusion damage to the one or more partitions 12 will require that they be repaired to prevent or avoid performance degradation of the diaphragm 100. In many cases, the one or more partitions 12 refers to each and every partition 12 in the diaphragm 100 as the working fluid will tend to aerodynamically interact substantially similarly with each partition 12. The method will, therefore, relate to the repair of each and every partition 12 for all the iterations of the method. However, to the extent that some partitions 12 may be undamaged compared to others, it is to be understood that method may further include inspecting the diaphragm 100 and identifying only those partitions 12 that have suffered damage as being the one or more partitions 12 to be machined and subsequently repaired.

In accordance with embodiments, each of the one or more partitions 12 is machined in a substantially similar manner. That is, following the machining, each of the one or more partitions 12 includes a substantially uniformly shaped and sized partial airfoil section 40. In most cases, the removed material comes from the trailing edges 124 of the one or more partitions 12, so each of the partial airfoil sections 40 may include a main body 41, an inner flange 42 and an outer flange 43 that cooperatively define a space 44 that is representative of the material removed from the corresponding partition 12. With the partial airfoil sections 40 formed in this manner, the fabricating operation may include fabricating each of the one or more replacement inserts 30 substantially similarly. In this way, each replacement insert 30 is designed to fit tightly in each of the spaces 44.

With the one or more partitions 12 machined and the replacement inserts 30 fabricated, the replacement inserts 30 are located in the spaces 44 of the corresponding partitions 12 with an appropriate amount of braze material including flux material and filler material. The diaphragm 100 is then placed in a brazing furnace where the replacement inserts 30 can be substantially simultaneously braze-coupled to each of the one or more partitions 12 by, for example, vacuum furnace brazing. In doing so, each of the one or more partitions 12, as repaired, now includes a partial airfoil section 40 and a replacement insert 30 that is braze-coupled to the partial airfoil section 40. A trailing edge of the replacement insert 30 thus forms at least a portion of the trailing edge 124 of the partition 12.

By vacuum furnace brazing the diaphragm 100 such that each replacement insert 30 is braze-coupled to each of the one or more partitions 12, respectively, the amount of repair effort and time can be reduced substantially. This is due to the fact that a need for individual welding or brazing of each replacement insert 30 to each of the one or more partitions 12 is removed. Moreover, error associated with individual welding or brazing of each replacement insert 30 is decreased since the ability to vacuum furnace braze the diaphragm 100 as a whole can be at least partially automated.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for repairing a turbine component having an array (10) of partitions (12), the method comprising:
machining one or more partitions (12) of the array (10) to remove trailing edge (124) sections thereof;
fabricating one or more replacement inserts (30);
respectively locating the one or more replacement inserts (30) in the one or more machined partitions (12); and
substantially simultaneously brazing the one or more replacement inserts (30) to the one or more machined partitions (12).

2. The method according to claim 1, further comprising operating the steam turbine component for a predefined time prior to the machining.

3. The method according to claim 1 or claim 2, further comprising:
inspecting the steam turbine component; and
identifying damaged partitions as one or more partitions (12) to be machined.

4. The method according to claim 1, 2 or 3, wherein the machining comprises machining each of the one or more partitions (12) substantially similarly.

5. The method according to claim 4, wherein the fabricating comprises fabricating each of the one or more replacement inserts (30) substantially similarly.

6. The method according to any preceding claim, wherein the substantially simultaneously brazing of the one or more replacement inserts (30) to the one or more machined partitions (12) is conducted in a vacuum furnace.

7. The method according to any preceding claim, wherein the turbine component comprises a steam turbine diaphragm (100).

8. The method according to any preceding claim, the method comprising:
machining each partition of the array (10) to remove trailing edge sections (124) thereof;
fabricating replacement inserts (30);
locating the replacement inserts (30) in the machined partitions (12); and
substantially simultaneously brazing the replacement inserts (30) to the machined partitions (12).

9. A turbine component (100), comprising:
inner (18) and outer (20) rings disposed to define a fluid pathway; and
an array (10) of partitions (12) supportively disposed between the inner (18) and outer (20) rings to aerodynamically interact with a working fluid flowing along the fluid pathway,
one or more of the partitions (12) of the array (10) of partitions comprising:
a partial airfoil section; and
a replacement insert (30) braze-coupled to the partial airfoil section.

10. The turbine component according to claim 9, wherein the turbine component comprising a steam turbine diaphragm (100).

11. The turbine component according to claim 9 or claim 10, wherein each partition of the array (10) of partitions (12) comprises:
a partial airfoil section; and
a replacement insert (30) braze-coupled to the partial airfoil section.

12. The turbine component according to claim 11, wherein each partial airfoil section is substantially similarly shaped and/or each replacement insert (30) is substantially similarly shaped.

13. The turbine component according to any one of claims 9 to 12, wherein each replacement insert (30) forms a portion of a trailing edge (124) of the corresponding one partition (12).
